# EUROPEAN PATENT APPLICATION

(11) **EP 4 554 130 A1**
(43) Date of publication of application: **14.05.2025**
(21) Application number: 24209886.1
(22) Date of filing: 30.10.2024
(51) Int. Cl.: H04L 5/00, H04L 27/26, H04W 84/12

(54) **APPARATUS AND METHOD FOR SUPPORTING COMMUNICATION USING PLURALITY OF BANDWIDTHS IN WIRELESS LOCAL AREA NETWORK SYSTEM**

(30) Priority: 07.11.2023 KR 20230153109; 16.04.2024 KR 20240050912
(71) Applicant: Samsung Electronics Co., Ltd., Suwon-si, Gyeonggi-do 16677 (KR)
(72) Inventor: KIM, Myeongjin, Suwon-si, Gyeonggi-do 16677 (KR); KIM, Jinmin, Suwon-si, Gyeonggi-do 16677 (KR); CHUNG, Chulho, Suwon-si, Gyeonggi-do 16677 (KR); JEON, Eunsung, Suwon-si, Gyeonggi-do 16677 (KR)
(74) Representative: Kuhnen & Wacker Patent- und Rechtsanwaltsbüro PartG mbB

(57) **Abstract**

A method of wireless communication in a first device (AP1) includes transmitting (S100) a physical layer protocol data unit, PPDU, including inserted PPDU information to a plurality of second devices (STA1, STA2, STA3), detecting (S110) generation of latency sensitive traffic for a third device (STA4) while transmitting the PPDU to the plurality of second devices (STA1, STA2, STA3), and transmitting (S120) an inserted PPDU including the latency sensitive traffic to the third device through a target resource.

## Description

### BACKGROUND

This application is related to an apparatus and method for supporting communication using a plurality of bandwidths in a wireless local area network (WLAN) system.

As an example of wireless communication, WLANs are technology of connecting two or more devices by using a wireless signal transmission method. The WLAN technologies may be based on the Institute of Electrical and Electronics Engineers (IEEE) 802.11 standard. The 802.11 standard has evolved into 802.11b, 802.11a, 802.11g, 802.11n, 802.11ac, 802.11ax, 802.11be, etc., and may support a transmission speed of up to gigabits per second (Gbps), based on orthogonal frequency-division multiplexing (OFDM) technologies.

In a WLAN system, when latency sensitive traffic is generated while a first device (e.g., an access point) transmits a physical layer protocol data unit (PPDU) to a second device (e.g., a first station), the first device may stop the transmission of the PPDU and, after a certain time (e.g., a short interframe space (SIFS)) elapses, the first device may transmit a new PPDU including the latency sensitive traffic to a third device (e.g., a second station).

That is, when the latency sensitive traffic is generated during the PPDU transmission, the conventional art must stop the transmission of the existing PPDU and transfer the latency sensitive traffic through a new PPDU transmitted after a certain time, so there was a drawback of decreasing the efficiency of use of limited resources (or time-frequency radio resources).

### SUMMARY

Embodiments provide an apparatus and method for quickly transmitting latency sensitive traffic by efficiently using finite resources, in a wireless local area network (WLAN) system.

Provided herein is a method of wireless communication in a first device, the method including: transmitting a first physical layer protocol data unit (PPDU) including inserted PPDU information to a plurality of second devices; detecting a generation of a latency sensitive traffic for a third device while transmitting the first PPDU to the plurality of second devices; and transmitting an inserted PPDU including the latency sensitive traffic to the third device through a target resource corresponding to the inserted PPDU information.

Also provided herein is a method of wireless communication in a first device, the method including: receiving a first physical layer protocol data unit (PPDU) including a plurality of pieces of data from a second device through a plurality of resources; obtaining inserted PPDU information from the first PPDU; and performing a monitoring operation for an inserted PPDU by monitoring the inserted PPDU information.

Further provided herein is a method of wireless communication in a first device, the method including: selecting, as a target resource, one of resources allocated to a plurality of second devices; filling a first latency sensitive traffic (LST) subfield to a third LST subfield with values, indicating that there is a presence of an inserted physical layer protocol data unit (PPDU), and indicating the target resource to be used for a transmission of the inserted PPDU; transmitting a first PPDU including the first LST subfield to the third LST subfield to the plurality of second devices; and transmitting the inserted PPDU to a third device through the target resource.

In addition, provided herein is a method of wireless communication in a first device, the method including: transmitting a first physical layer protocol data unit (PPDU) including inserted PPDU information to a plurality of second devices; detecting a generation of a latency sensitive traffic for a third device while transmitting the first PPDU to the plurality of second devices; selecting a first target resource among a plurality of target resources corresponding to the inserted PPDU information, based on a communication environment with the plurality of second devices; and transmitting an inserted PPDU including the latency sensitive traffic to the third device through the first target resource.

### BRIEF DESCRIPTION OF DRAWINGS

Embodiments will be more clearly understood from the following detailed description taken in conjunction with the accompanying drawings in which:
FIG. 1 is a diagram illustrating a wireless communication system according to an embodiment;
FIG. 2 is a diagram to explain a method of transmitting latency sensitive traffic according to a comparative example;
FIG. 3 is a diagram to explain a method of transmitting latency sensitive traffic according to an embodiment;
FIG. 4 is a block diagram illustrating a wireless communication system according to an embodiment;
FIG. 5 is a flowchart to explain a method of wireless communication in an access point according to an embodiment;
FIG. 6A is a flowchart to explain a method of wireless communication in a station according to an embodiment, and FIG. 6B is a flowchart to explain a specific operation of operation S220 of FIG. 6A;
FIG. 7 is a diagram illustrating a physical layer protocol data unit (PPDU) format according to an embodiment;
FIG. 8 is a diagram to explain a first LST subfield according to an embodiment;
FIG. 9 is a diagram to explain a specific example of arrangement of the first LST subfield of FIG. 8 on a U-SIG field;
FIG. 10 is a diagram for explaining a second LST subfield and a third LST subfield according to an embodiment;
FIGS. 11 and 12 are diagrams for explaining a specific example of arrangement of the second LST subfield and the third LST subfield of FIG. 10 on an UHR-SIG content channel;
FIGS. 13A and 13B are diagrams for explaining inserted PPDU information at an 80 MHz bandwidth;
FIG. 14 is a flowchart to explain a method of wireless communication in an access point according to an embodiment;
FIG. 15 is a flowchart to explain a method of wireless communication in a station according to an embodiment;
FIG. 16 is a diagram to explain an inserted PPDU format according to an embodiment;
FIG. 17 is a flowchart to explain a method of wireless communication in an access point according to an embodiment;
FIG. 18 is a block diagram illustrating a device according to an embodiment; and
FIG. 19 is a diagram illustrating examples of devices for wireless communication according to an embodiment.

### DETAILED DESCRIPTION

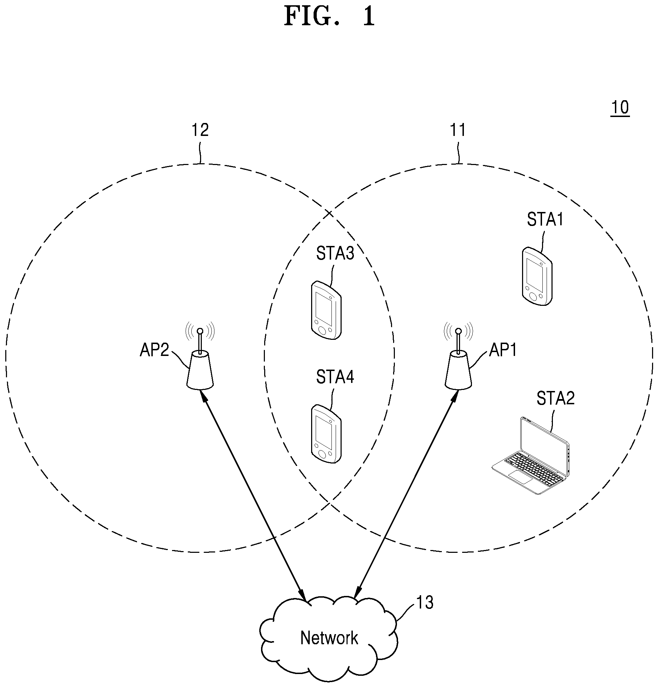

FIG. 1 is a diagram illustrating a wireless communication system 10 according to an embodiment. Specifically, FIG. 1 illustrates a wireless local area network (WLAN) system as an example of the wireless communication system 10.

In specifically describing embodiments, a wireless communication system capable of providing orthogonal frequency division multiplexing (OFDM) or orthogonal frequency division multiplexing access (OFDMA) - based communication, in particular, a wireless communication system defined in the IEEE 802.11 standard will be the main target. Embodiments are applicable, with slight modifications, to other communication systems having a similar technical background and channel type (e.g., cellular communication systems such as long term evolution (LTE), LTE-advanced (LTE-A), new radio (NR), wireless broadband (WiBro), and global system for mobile communication (GSM), or short-range communication systems such as Bluetooth and near field communication (NFC)), without departing from the scope of embodiments.

Also, various functions described below may be implemented or supported by artificial intelligence technologies or one or more computer programs, and each of the programs is comprised of computer-readable program code and is implemented on computer-readable media. The terms "application" and "program" refer to one or more computer programs, software components, sets of instructions, procedures, functions, objects, classes, instances, associated data, or portions thereof suitable for implementation in suitable computer-readable program code. The term "computer-readable program code" includes all types of computer code including source code, object code, and executable code. The term "computer-readable media" includes all types of media that may be accessed by a computer, such as read only memory (ROM), random access memory (RAM), a hard disk drive, a compact disk (CD), a digital video disk (DVD), or any other memories. "Non-transitory" computer-readable media exclude wired, wireless, optical, or other communication links that transmit transient electrical or other signals. The non-transitory computer-readable media include media that may permanently store data, and media that may store data and overwrite data below such as a rewritable optical disk or an erasable memory device.

In various embodiments described below, a hardware approach method is described as an example. However, various embodiments do not exclude a software based approach method in that the various embodiments include technology that uses both hardware and software.

Also, terms such as latency sensitive traffic (LST), an inserted physical layer protocol data unit (PPDU), and an LST subfield used in a description made below are given as an example for easiness of description. Accordingly, embodiments are not limited to the terms described below, and other terms having equivalent technical meanings may be used.

Referring to FIG. 1, the wireless communication system 10 may include a first access point AP1, a second access point AP2, a first station STA1, a second station STA2, a third station STA3, and a fourth station STA4. The first access point AP1 and the second access point AP2 may access a network 13 that includes the Internet, an Internet Protocol (IP) network, or any other network. The first access point AP1 may provide access to the network 13 to the first station STA1, the second station STA2, the third station STA3, and the fourth station STA4 within a first coverage area 11, and the second access point AP2 may also provide access to the network 13 to the third station STA3 and the fourth station STA4 within a second coverage area 12. In some embodiments, the first access point AP1 and the second access point AP2 may communicate with at least one of the first station STA1, the second station STA2, the third station STA3, and the fourth station STA4, based on wireless fidelity (WiFi) or any other WLAN access technology.

The access point may be referred to as a router, a gateway, etc., and the station may be referred to as a mobile station, a subscriber station, a terminal, a mobile terminal, a wireless terminal, user equipment, or a user, etc. The station may include a mobile device such as a mobile phone, a laptop computer, a wearable device, etc., or include a stationary device such as a desktop computer, a smart TV, etc. In this specification, the station STA and the access point AP may also be referred to as devices.

The first access point AP1 may allocate resources to each of the first station STA1 to third station STA3 for communication with the first station STA1 to third station STA3. In this specification, the resource is a time-frequency radio resource, and may include a resource unit or a multiple resource unit combining two or more resource units.

A description is made below focusing on an operation of the first access point AP1 when latency sensitive traffic is generated for the fourth station STA4. In this specification, latency sensitive traffic for a specific device may be defined as data that must be transmitted to the specific device as quickly as possible. For example, latency-sensitive traffic requires lower latency compared to normal traffic, and both latency-sensitive traffic and normal traffic are managed by the access point.

The first access point AP1 may transmit a PPDU to the first station STA1 to third station STA3 through resources allocated to the first station STA1 to third station STA3. At this time, a PPDU transmission operation of the first access point AP 1 may be based on an orthogonal frequency division multiplexing access (OFDMA) transmission mode. At this time, the PPDU may be referred to as an OFDMA PPDU. Meantime, in an embodiment, the fourth station STA4 may also receive the PPDU in that the fourth station STA4 is located within the first coverage area 11 of the first access point AP1, and the fourth station STA4 may detect an inserted PPDU described below, based on the PPDU.

In an example, the PPDU may be transmitted through a first resource allocated for communication with the first station STA1, a second resource allocated for communication with the second station STA2, and a third resource allocated for communication with the third station STA3. In this specification, the resources allocated to the first station STA1 to third station STA3 may be referred to as resources of the PPDU.

In an embodiment, when the first access point AP1 detects generation of latency sensitive traffic for the fourth station STA4 while transmitting the PPDU to the first station STA1 to third station STA3, the first access point AP1 may transmit the inserted PPDU including the latency sensitive traffic to the fourth station STA4, through a target resource allocated for transmission of the latency sensitive traffic among the resources of the PPDU. The PPDU in which transmission has commenced may be referred to as the first PPDU, and the PPDU which has been suddenly generated with latency sensitive traffic may be referred to as the inserted PPDU. In an example, when the first access point AP1 sets the first resource allocated to the first station STA1 as the target resource, the first access point AP1 may transmit the inserted PPDU to the fourth station STA4 through the target resource at a specific time point. That is, the PPDU may dynamically include the inserted PPDU.

In some embodiments, the first access point AP1 may set two or more target resources among the resources of the PPDU, and transmit the inserted PPDU through one of the target resources. In a specific example, the first access point AP 1 may select one of the target resources, based on the current first coverage area 11 or a communication environment with the first station STA1 to third station STA3, and transmit the inserted PPDU to the fourth station STA4 through the selected target resource. A coverage area may also be referred to as wireless coverage.

Also, in an example, the first access point AP1 may be configured to support transmission of the inserted PPDU in the OFDMA transmission mode. However, this is only an embodiment and is not limited thereto, and may also support the transmission of the inserted PPDU, even in any other transmission mode.

In an embodiment, the first access point AP1 may include inserted PPDU information in the PPDU so that the fourth station STA4 may detect the inserted PPDU. In an example, the inserted PPDU information may include first information indicating whether there is a possibility of transmitting the inserted PPDU, and second information indicating the target resource among the resources of the PPDU.

In an embodiment, the first access point AP1 may arrange the inserted PPDU information across some of fields of the PPDU so that the fourth station STA4 may effectively obtain the inserted PPDU information from the PPDU. The fields across which the inserted PPDU information is arranged may be predefined between the first access point AP1 and the fourth station STA4. In some embodiments, the fields across which the inserted PPDU information is arranged may be defined in the 802.11 standard.

In an embodiment, the first access point AP1 may include a certain data sequence in the inserted PPDU so that the fourth station STA4 may detect the inserted PPDU.

A description is made below focusing on an operation of the fourth station STA4.

In an embodiment, the fourth station STA4 may obtain the inserted PPDU information from the PPDU. In a specific example, the fourth station STA4 may sequentially extract values of some fields of the PPDU and obtain the inserted PPDU information from the PPDU. Based on the inserted PPDU information, the fourth station STA4 may check whether there is a possibility of transmitting the inserted PPDU and may check the target resource allocated for transmission of the inserted PPDU.

In an embodiment, before obtaining the inserted PPDU information from the PPDU, the fourth station STA4 may preferentially check whether a transmission mode of the first access point AP1 is an OFDMA transmission mode. That is, since the first access point AP1 may support the transmission of the inserted PPDU when operating in the OFDMA transmission mode, the fourth station STA4 may obtain the inserted PPDU information from the PPDU after first detecting, from the PPDU, that the transmission mode of the first access point AP1 is the OFDMA transmission mode.

In an embodiment, the fourth station STA4 may perform a monitoring operation for the inserted PPDU in the PPDU, based on the inserted PPDU information. In a specific example, when the fourth station STA4 checks that there is a possibility of transmitting the inserted PPDU, the fourth station STA4 may initiate the monitoring operation for the inserted PPDU, and may monitor whether a signal received through the checked target resource corresponds to the inserted PPDU. Also, when the fourth station STA4 checks that there is no possibility of transmitting the inserted PPDU, the fourth station STA4 may not perform the monitoring operation for the inserted PPDU.

Embodiments may also be applied to an access point that controls a coverage area where more or fewer stations than those of FIG. 1 are located.

Also, embodiments may be fully applied not only to PPDUs (or OFDMA PPDUs) transmitted from the access point to the stations, but also to PPDUs (or OFDMA PPDUs) transmitted from the stations to the access point. In a specific example, the above-described embodiments may also be applied to a PPDU transmitted from at least two of the first station STA1 to fourth station STA4 to the first access point AP1.

When the latency sensitive traffic for the fourth station STA4 is generated while the PPDU is transmitted to the first station STA1 to third station STA3, the first access point AP1 according to an embodiment may quickly transmit the inserted PPDU including the latency sensitive traffic to the fourth station STA4 through the target resource among the allocated resources of the PPDU, thereby improving the efficiency of use of finite resources.

The first access point AP1 according to an embodiment may appropriately include the inserted PPDU information in some fields of the PPDU so that the fourth station STA4 may effectively detect the inserted PPDU included in the PPDU.

Also, the fourth station STA4 according to an embodiment may perform the monitoring operation for the inserted PPDU, based on the inserted PPDU information included in the PPDU, increase a probability of successful reception of the latency sensitive traffic, and improve the efficiency of use of finite resources.

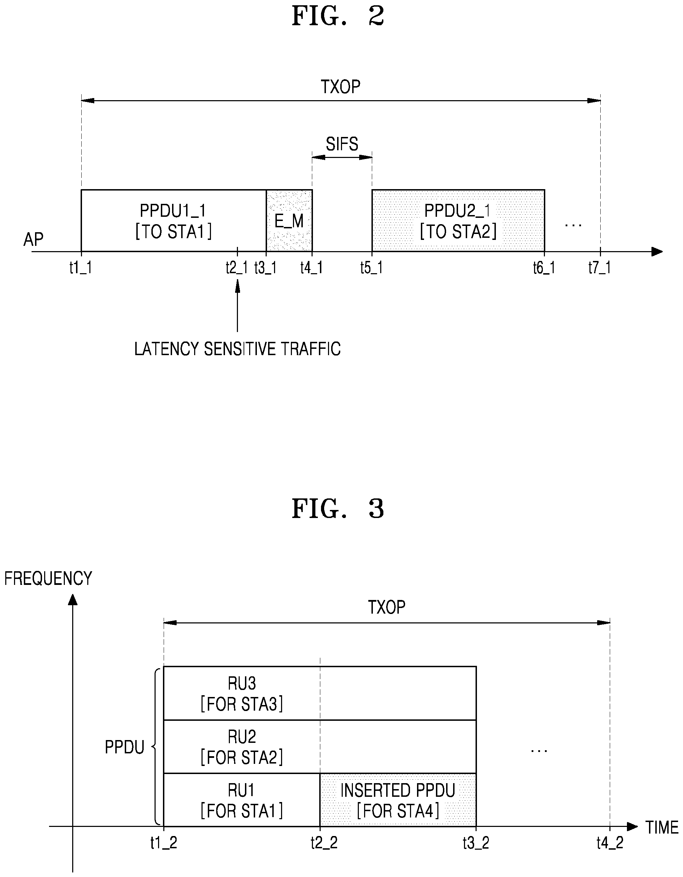

FIG. 2 is a diagram to explain a method of transmitting latency sensitive traffic according to a comparative example.

Referring to FIG. 2, the first access point AP1 may transmit a first PPDU PPDU1_1 to the first station STA1 within a transmission opportunity TXOP duration. Specifically, the first access point AP1 may start transmitting the first PPDU PPDU1_1 at time 't1_1'.

The first access point AP1 may detect generation of latency sensitive traffic for the second station STA2 during the transmission of the first PPDU PPDU1_1, at time 't2_1'.

The first access point AP1 may transmit an end mark (E_M) for the first PPDU PPDU1_1 to the first station STA1 from time 't3 _1' and stop the transmission of the first PPDU PPDU1_1 at time `t4_1'.

After a short interframe space (SIFS) elapses from time 't4_1', the first access point AP1 may transmit a second PPDU PPDU2_1 including the latency sensitive traffic to the second station STA2 at time `t5_1'.

In the comparative example, after the SIFS elapses, the second PPDU PPDU2_1 may be transmitted to the second station STA2 and in the TXOP duration, the resources allocated to the first station STA1 or second station STA2 may not be used during the SIFS and thus, the efficiency of use of resources may decrease. Also, when it is expected that the second PPDU PPDU2_1 including the latency sensitive traffic for the second station STA2 will not be transmitted entirely within the TXOP duration due to a resource use blank duration during the SIFS, there is a drawback of having to wait until a next TXOP duration arrives in order to transmit the second PPDU PPDU2_1.

FIG. 3 is a diagram to explain a method of transmitting latency sensitive traffic according to an embodiment. Description of FIG. 3 is made below with further reference to FIG. 1, and description previously given in FIG. 1 is omitted. Meantime, in FIG. 3, a description is made on the assumption that the first access point AP1 operates in the OFDMA transmission mode, and a function of transmitting the inserted PPDU may be supported in the OFDMA transmission mode. However, this is only an embodiment and is not limited thereto, and a function related to transmission of the inserted PPDU may be also supported in any other transmission mode.

Referring to FIG. 3, the first access point AP1 may transmit a PPDU to the first station STA1 to the third station STA3 through a first resource unit RU1 to a third resource unit RU3, respectively, within a TXOP duration between time 't1_2' and time 't4_2'. Meantime, the PPDU may be referred to as an OFDMA PPDU. Specifically, the first resource unit RU1 may be allocated for communication with the first station STA1, the second resource unit RU2 may be allocated for communication with the second station STA2, and the third resource unit RU3 may be allocated for communication with the third station STA3.

The first access point AP1 may detect generation of latency sensitive traffic for the fourth station STA4 during transmission of the PPDU, at time 't2_2'.

The first access point AP1 may stop transmitting first data to the first station STA1 through the first resource unit RU1, at time 't3_2', and transmit an inserted PPDU including the latency sensitive traffic to the fourth station STA4 through the first resource unit RU1 that is a target resource. The inserted PPDU may be transmitted together with second data transmitted to the second station STA2 through the second resource unit RU2 and third data transmitted to the third station STA3 through the third resource unit RU3.

In an example, the PPDU may be defined as including the first data to the third data, and the first data to the third data may correspond to a data field of the PPDU.

Also, the first access point AP1 may include inserted PPDU information in a preamble of the PPDU so that the fourth station STA4 may detect an inserted PPDU. In an example, a location of the inserted PPDU information in the PPDU may be predefined between the first access point AP1 and the fourth station STA4. The inserted PPDU information may indicate that there is a possibility of transmitting the inserted PPDU, and indicate a target resource through which the inserted PPDU is transmitted as the first resource unit RU1.

The fourth station STA4 may obtain the inserted PPDU information from the preamble of the PPDU, and perform a monitoring operation for the inserted PPDU, based on the inserted PPDU information. That is, the fourth station STA4 may monitor whether a signal received through the first resource unit RU1, which is the target resource, corresponds to the inserted PPDU.

Specifically, the fourth station STA4 may measure the degree of correlation between a data sequence of a signal received through the first resource unit RU1 from before time 't3_2' and a reference sequence, and detect the insert PPDU, based on the measurement result. The first access point AP1 may include, in the inserted PPDU, a data sequence matching the reference sequence of the fourth station STA4.

The fourth station STA4 may perform a decoding operation for the detected inserted PPDU and obtain the latency sensitive traffic from the inserted PPDU.

In an embodiment, the inserted PPDU may be transmitted to the fourth station STA4 subsequently to the first data transmitted to the first station STA1 through the first resource unit RU1, and the first resource unit RU1 may be used directly as the target resource. That is, a duration in which the allocated resources may not be used in the comparative example may be minimized in the embodiment, and this may lead to the improvement of the efficiency of use of resources. Also, in an embodiment, within the TXOP duration, a sufficient time margin may be secured to transmit the inserted PPDU including the latency sensitive traffic to the fourth station STA4, thereby effectively performing low latency-based communication.

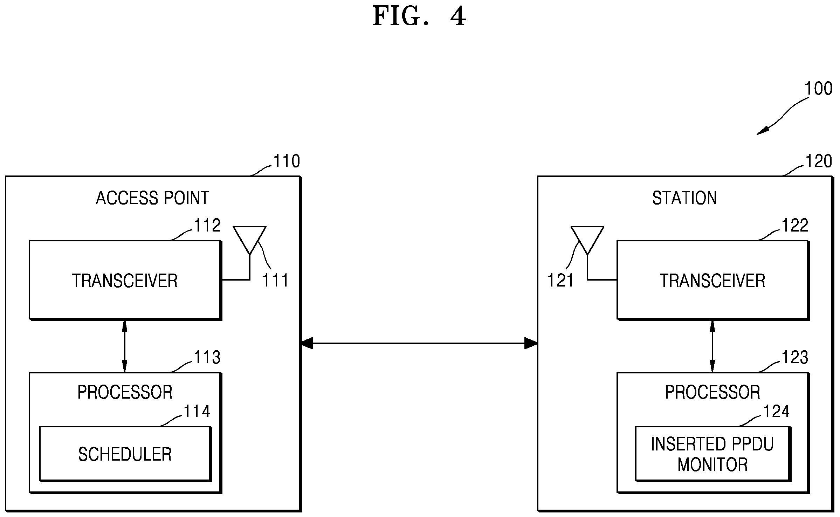

FIG. 4 is a block diagram illustrating a wireless communication system 100 according to an embodiment. Specifically, the block diagram of FIG. 4 illustrates an access point 110 and a station 120 that communicates with the access point 110 in the wireless communication system 100, and the access point 110 may correspond to the first access point AP1 of FIG. 1, and the station 120 may correspond to the fourth station STA4 of FIG. 1. The access point 110 and the station 120 of FIG. 4 may be devices communicating with each other in the wireless communication system 100, and may be referred to as devices for wireless communication. In some embodiments, the access point 110 may include one of a plurality of access points included in an AP multi-link device (MLD), and the station 120 may include one of a plurality of stations included in a non-AP MLD.

Referring to FIG. 4, the access point 110 may include an antenna 111, a transceiver 112, and a processor 113. In some embodiments, the antenna 111, the transceiver 112, and the processor 113 may be included in one package or may be included in different packages. The station 120 may include an antenna 121, a transceiver 122, and a processor 123. Descriptions previously given for the access point 110 and the station 120 are omitted below.

The antenna 111 may receive a signal from the station 120 and provide the signal to the transceiver 112, and may also transmit a signal provided from the transceiver 112 to the station 120. In some embodiments, the antenna 111 may include a plurality of antennas for multi-input and multi-output (MIMO). Also, in some embodiments, the antenna 111 may include a phased array for beamforming.

The transceiver 112 may process a radio frequency (RF) band signal received from the station 120 through the antenna 111, into a baseband signal, and provide the processed signal to the processor 113. Also, the transceiver 112 may process a baseband signal provided from the processor 113, into an RF band signal, and output the processed signal through the antenna 111. In some embodiments, the transceiver 112 may include an analog circuit, such as a low noise amplifier, a mixer, a filter, a power amplifier, an oscillator, etc. In some embodiments, the transceiver 112 may process a signal received from the antenna 111 and/or a signal received from the processor 113, under control by the processor 113.

The processor 113 may process a signal received from the transceiver 112 and obtain (or extract) data transmitted from the station 120. For example, the processor 113 may demodulate and/or decode a signal received from the transceiver 112 and obtain information transmitted from the station 120. Also, the processor 113 may generate a signal including data to be transmitted to the station 120 and provide the signal to the transceiver 112. For example, the processor 113 may provide the transceiver 112 with a signal generated by encoding and/or modulating data to be transmitted to the station 120. In some embodiments, the processor 113 may include a programmable component such as a central processing unit (CPU), a digital signal processor (DSP), etc., may include a reconfigurable component such as a field programmable gate array (FPGA), etc., or may include a component providing a fixed function such as intellectual property (IP) cores, etc. In some embodiments, the processor 113 may include, or access, a memory that stores data and/or a series of instructions. In this specification, the transceiver 112 and/or the processor 113 performing operations may simply be referred to as the access point 110 performing the corresponding operations. Accordingly, the operations performed by the access point 110 may be performed by the transceiver 112 and/or the processor 113 included in the access point 110, and the operations performed by the station 120 may be performed by the transceiver 122 and/or the processor 123 included in the station 120.

The processor 113 of the access point 110 may include a scheduler 114. In this specification, an operation of the scheduler 114 may simply be referred to as an operation performed by the processor 113. In an embodiment, the scheduler 114 may allocate a plurality of resources to a plurality of stations for the sake of communication with the plurality of stations (e.g., the first station STA1 to third station STA3 in FIG. 1), and may set one of the plurality of allocated resources as a target resource. In an example, the target resource may be comprised of a resource unit or a multiple resource unit. Also, the scheduler 114 may selectively activate a function of transmitting the inserted PPDU in an OFDMA transmission mode and deactivate the function of transmitting the inserted PPDU in other transmission modes.

In an embodiment, when the function of transmitting the inserted PPDU is activated by the scheduler 114, the processor 113 may generate inserted PPDU information indicating that there is a possibility of transmitting the inserted PPDU. Also, the inserted PPDU information may indicate a target resource set by the scheduler 114.

In an embodiment, the processor 113 may generate the PPDU including the inserted PPDU information. In an example, the inserted PPDU information may be included in a preamble of the PPDU. The processor 113 may transmit the PPDU to the plurality of stations through the allocated resources by using the transceiver 112 and the antenna 111.

In an embodiment, the processor 113 may detect generation of latency sensitive traffic for the station 120, and the processor 113 may generate an inserted PPDU including the latency sensitive traffic. In an embodiment, the inserted PPDU may be configured to be detected by the station 120 and decoded by the station 120. In an example, a modulation and coding scheme predefined exclusively for the inserted PPDU may be applied to the inserted PPDU. In another example, a modulation and coding scheme that matches a modulation and coding scheme of a PPDU previously transmitted through a target resource may be applied to the inserted PPDU. In a further example, a modulation and coding scheme suitable for a communication environment with the station 120 may be applied to the inserted PPDU. The processor 113 may transmit the inserted PPDU to the station 120 through the target resource by using the transceiver 112 and the antenna 111. In an example, the inserted PPDU may be transmitted as included in the PPDU.

In an embodiment, the processor 123 of the station 120 may include an inserted PPDU monitor 124. In this specification, an operation of the inserted PPDU monitor 124 may simply be referred to as an operation performed by the processor 123. Meantime, the station 120 may be located within a coverage area of the access point 110 and receive a PPDU transmitted from the access point 110. The inserted PPDU monitor 124 may obtain inserted PPDU information from a PPDU received through the antenna 121 and the transceiver 122.

In an embodiment, based on the inserted PPDU information, the inserted PPDU monitor 124 may check whether there is a possibility of transmitting an inserted PPDU from the access point 110 and check at least one of target resources through which the inserted PPDU is transmitted. When the inserted PPDU monitor 124 checks, from the inserted PPDU information, that there is the possibility of transmitting the inserted PPDU, the inserted PPDU monitor 124 may monitor whether a signal received through the target resource corresponds to the inserted PPDU.

In an embodiment, when the inserted PPDU transmitted from the access point 110 is detected by the inserted PPDU monitor 124, the processor 123 may perform a decoding operation for the inserted PPDU and obtain latency sensitive traffic from the inserted PPDU.

However, an implementation example of the access point 110 and the station 120 illustrated in FIG. 4 is only an embodiment and is not limited thereto, and the access point 110 and the station 120 may each be implemented variously and smoothly perform an operation according to the technical idea of the embodiments.

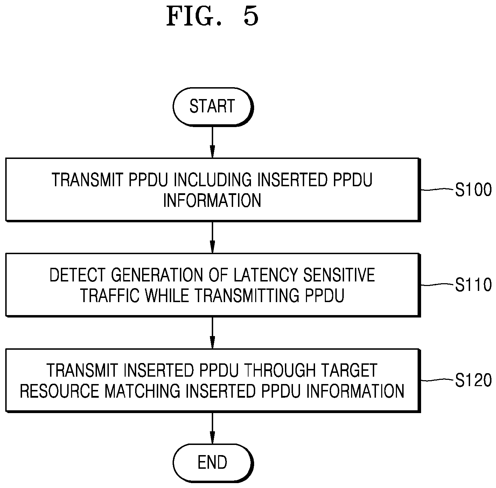

FIG. 5 is a flowchart to explain a method of wireless communication in an access point according to an embodiment. In FIG. 5, a plurality of stations may be located within a coverage area of the access point, and the access point may communicate with the plurality of stations, based on a WLAN.

Referring to FIG. 5, in operation S100, the access point may transmit a PPDU including inserted PPDU information to first stations among the plurality of stations. In an embodiment, the access point may arrange the inserted PPDU information across some of fields of the PPDU.

In operation S 110, while transmitting the PPDU, the access point may detect generation of latency sensitive traffic for a second station among the plurality of stations. In an embodiment, the access point may detect that the latency sensitive traffic should be transmitted to the second station, and may quickly generate an inserted PPDU so that the inserted PPDU including the latency sensitive traffic may be transmitted to the second station within a TXOP duration corresponding to the PPDU.

In operation S120, the access point may transmit the inserted PPDU to the second station through a target resource matching the inserted PPDU information. In an embodiment, the access point may stop the transmission of the remnant of first data partially transmitted through the target resource among a plurality of pieces of data included in the PPDU, and immediately transmit the inserted PPDU through the target resource.

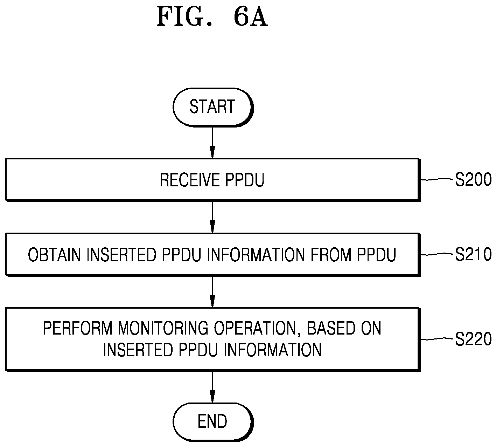

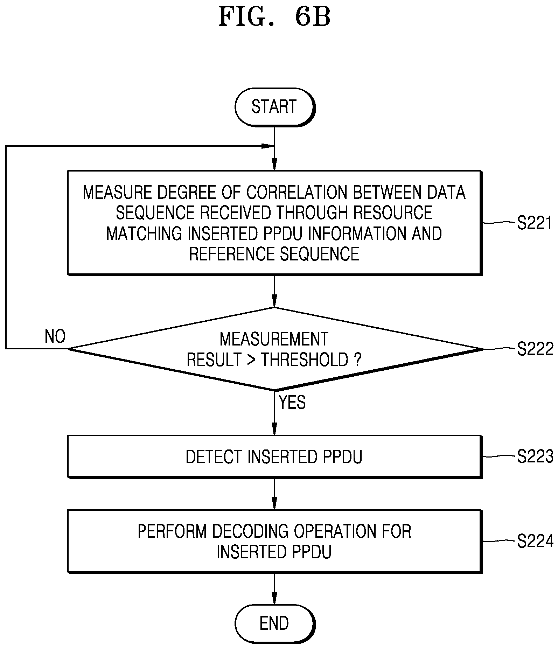

FIG. 6A is a flowchart to explain a method of wireless communication in a station according to an embodiment, and FIG. 6B is a flowchart to explain a specific operation of operation S220 of FIG. 6A. The station of FIGS. 6A and 6B may include the second station of FIG. 5.

Referring to FIG. 6A, in operation S200, the station may receive a PPDU from an access point. In an embodiment, the station may first check whether a transmission mode of the access point is an OFDMA transmission mode from the PPDU, and perform operation S210 when checking that the transmission mode is the OFDMA transmission mode. As described above, this is because the access point may support a function of transmitting an inserted PPDU in a specific transmission mode such as the OFDMA transmission mode.

In operation S210, the station may obtain inserted PPDU information from the PPDU. In an embodiment, the station may extract values in some fields of the PPDU and obtain inserted PPDU information comprised of the values. The inserted PPDU information may include first information indicating whether there is a possibility of transmitting the inserted PPDU from the access point, and second information indicating a target resource among a plurality of resources of the PPDU. For example, the first information may indicate the inserted PPDU is present in the received data and should be detected and decoded using received samples acquired over the target resource.

In operation S220, the station may perform a monitoring operation, based on the inserted PPDU information. In an embodiment, when the station checks that there is the possibility of transmitting the inserted PPDU through the first information, the station may check the target resource through the second information, perform a monitoring operation for a signal received through the target resource, and check whether the inserted PPDU is actually transmitted.

Referring further to FIG. 6B, in operation S221, the station may measure correlation information between a data sequence received through the target resource corresponding to the inserted PPDU information and a reference sequence. In an embodiment, the reference sequence may include a unique data sequence that the station has in order to detect the inserted PPDU transmitted for the station's purpose.

In operation S222, the station may determine whether the measurement result of operation S221 exceeds a threshold.

When operation S222 is 'NO', the station may return to operation S221.

When operation S222 is `YES', in operation S223, the station may detect the inserted PPDU. In an embodiment, when the degree of correlation between the data sequence of the signal received through the target resource and the reference sequence exceeds a threshold, the station may detect that the inserted PPDU has been transmitted to the corresponding station.

In operation S224, the station may perform a decoding operation for the inserted PPDU. In an embodiment, the station may obtain information for decoding the inserted PPDU through some fields of the inserted PPDU, and decode a data field of the inserted PPDU, based on the obtained information. The station may obtain latency sensitive traffic from the inserted PPDU through the decoding operation.

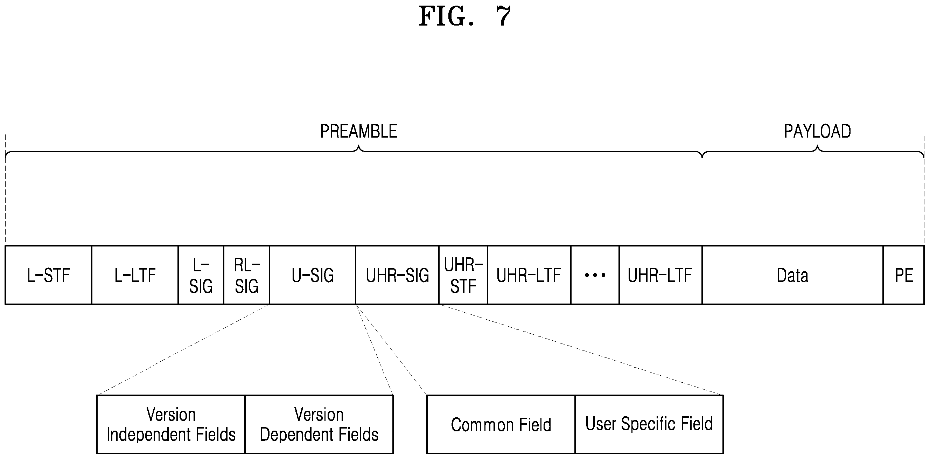

FIG. 7 is a diagram illustrating a PPDU format according to an embodiment. Specifically, FIG. 7 illustrates an ultra high reliability (UHR) multiple user (MU) PPDU format according to the UHR standard protocol. Embodiments may also be applied to the extremely high throughput (EHT) standard protocol, the EHT+ standard protocol and furthermore, the next-generation standard protocol. The next-generation standard protocol may be referred to as EHT+. The above-described PPDU may employ the UHR MU PPDU format of FIG. 7.

Referring to FIG. 7, an UHR MU PPDU may include a preamble including training fields and signal fields, and a payload including a data field and a packet extension (PE) field. In the preamble, the UHR MU PPDU may include a legacy-short training field (L-STF), a legacy-long training field (L-LTF), a legacy-signal (L-SIG) field, a repeated legacy-signal (RL-SIG) field, a universal signal (U-SIG) field, an ultra high reliability-signal (UHR-SIG) field, an ultra high reliability-short training field (UHR-STF), and an ultra high reliability-long training field (UHR-LTF). In this specification, the U-SIG field and the UHR-SIG field may be simply referred to as U-SIG and UHR-SIG, respectively. In this specification, the U-SIG field may be referred to as a first signal field, and the UHR-SIG field or an UHR-SIG content channel included in the UHR-SIG field may be referred to as a second signal field. The UHR-SIG field may be implemented to include a plurality of UHR-SIG content channels. In a schematic example, the first signal field may include first information indicating whether there is a possibility of transmitting an inserted PPDU. Also, the second signal field may indicate a plurality of resources allocated for transmission of a PPDU, and may also include second information indicating a target resource among the plurality of resources. A specific embodiment of this is described below.

The L-STF may include short training OFDM symbols, and may be used for frame detection, automatic gain control (AGC), diversity detection, and coarse frequency / time synchronization. The L-LTF may include long training OFDM symbols, and may be used for fine frequency/time synchronization and channel estimation. The L-SIG field may be used to transmit control information and may include information on a data rate and a data length. In some embodiments, the L-SIG field may be repeated in the RL-SIG field.

The U-SIG field (or U-SIG) may include control information that is common to a plurality of stations receiving the UHR MU PPDU. For example, as illustrated in FIG. 7, the U-SIG field may include version independent fields and version dependent fields. In some embodiments, the U-SIG field may further include fields respectively corresponding to a cyclic redundancy check (CRC) and a tail, and 'reserved' bits. The version independent fields may have static positions and bit definitions in different generations and/or physical versions. In some embodiments, the U-SIG field may be modulated based on a single modulation scheme such as binary phase-shift keying (BPSK), unlike the UHR-SIG field described below.

The UHR-SIG field may have a variable modulation and coding scheme (MCS) and length. For example, when the UHR MU PPDU is transmitted to multiple users (or a plurality of stations), as illustrated in FIG. 7, the UHR-SIG field may include a common field including common control information and a user specific field including user-dependent control information. As illustrated in FIG. 7, the U-SIG field may have a fixed length, whereas the UHR-SIG field may have a variable length. The common field may include a U-SIG overflow, the total number of non-OFDMA stations (or users), and an RU allocation subfield. The user specific field for non-MU MIMO may include an STA-ID subfield, an MCS subfield, an N_{STS} subfield, a beamformed subfield, and a coding subfield, and the user specific field for MU MIMO may include an STA-ID subfield, an MCS subfield, a coding subfield, and a spatial configuration subfield. In some embodiments, the UHR-SIG field may be modulated based on one of two or more modulation schemes such as binary phase shift keying (BPSK), quadrature phase shift keying (QPSK), etc.

In an embodiment, inserted PPDU information may be included across the U-SIG field and the UHR-SIG field. In an example, an access point may arrange the inserted PPDU information in the U-SIG field and UHR-SIG field of the preamble of the PPDU. In an example, the station may obtain the inserted PPDU information from the U-SIG field and UHR-SIG field of the preamble of the PPDU.

Meantime, the UHR MU PPDU format of FIG. 7 is only an example and is not limited thereto, and may be changed variously according to the UHR standard protocol. Also, the inserted PPDU information may be included in at least one field other than the U-SIG field and the UHR-SIG field.

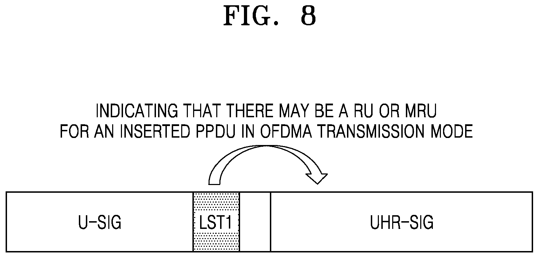

FIG. 8 is a diagram to explain a first LST subfield LST1 according to an embodiment. The first LST subfield LST1 may include a value corresponding to part of information of an inserted PPDU.

Referring to FIG. 8, the first LST subfield LST1 may be arranged in the U-SIG field. In an embodiment, the first LST subfield LST1 may include first bit data for indicating whether there is a possibility of transmitting an inserted PPDU from an access point. In a specific example, the first LST subfield LST1 may indicate whether there is a resource unit (RU) or a multiple resource unit (MRU) for the inserted PPDU in an OFDMA transmission mode. In an example, the first bit data may include one bit.

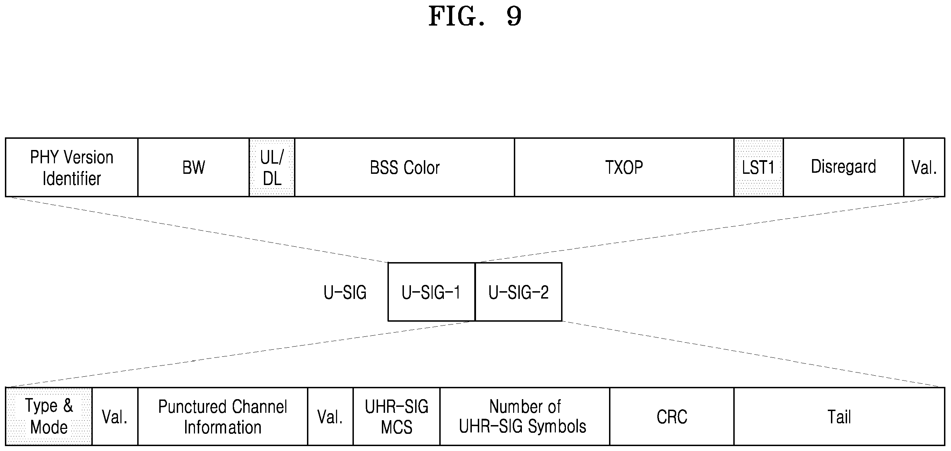

FIG. 9 is a diagram to explain a specific example of arrangement of the first LST subfield LST1 of FIG. 8 on a U-SIG field.

Referring to FIG. 9, the U-SIG field may include U-SIG-1 and U-SIG-2.

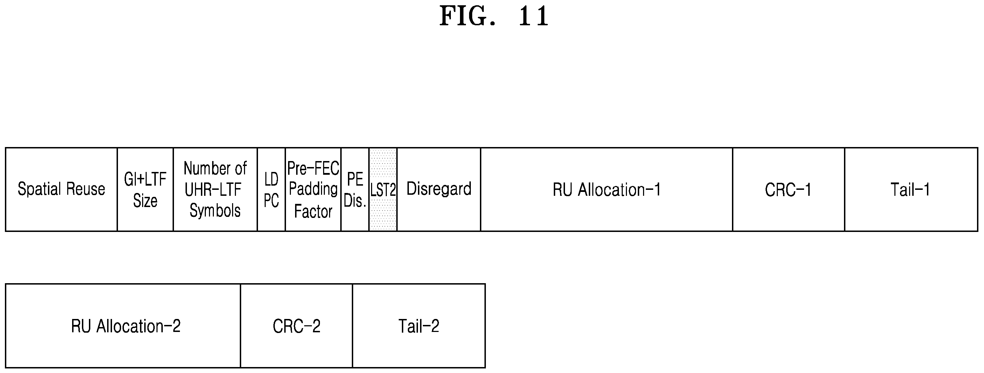

The U-SIG-1 may include version independent fields, such as a physical version identifier field, a bandwidth (BW) field, an uplink (UL) / downlink (DL) field, a BSS color field, a TXOP field, the first LST subfield LST1, and a 'reserved' field (Disregard, Val.). A reserved field may be marked as "Disregard" (see FIGS. 9 and 11).

Also, the U-SIG-2 may include version dependent fields, such as a PPDU type and compression mode (Type & Mode), a punctured channel information field, an UHR-SIG MCS field, a number of UHR-SIG symbols field, a CRC field, a tail field, and a 'reserved' field (Val.).

In an embodiment, the first LST subfield LST1 may be arranged in the 'reserved' field (Disregard) of the U-SIG-1. That is, the first LST subfield LST1 may be implemented using at least one of bits of the 'reserved' field (Disregard) of the U-SIG-1. In some embodiments, the first LST subfield LST1 may be arranged in the 'reserved' field of the U-SIG-1. That is, the first LST subfield LST1 may be implemented using at least one of the bits of the 'reserved' field (Val.) of the U-SIG-1.

In an embodiment, the UL/DL field and the PPDU type & compression mode field (Type & Mode) may indicate that an access point operates in an OFDMA transmission mode, and the first LST subfield LST1 may indicate that there is a possibility of transmitting an inserted PPDU.

In an embodiment, a station may extract values of the UL/DL field and the PPDU type & compression mode field (Type & Mode), and first check that the access point operates in the OFDMA transmission mode, based on the extracted values. Thereafter, the station may extract a value of the first LST subfield LST1, and check that there is a possibility of transmitting an inserted PPDU, based on the extracted value.

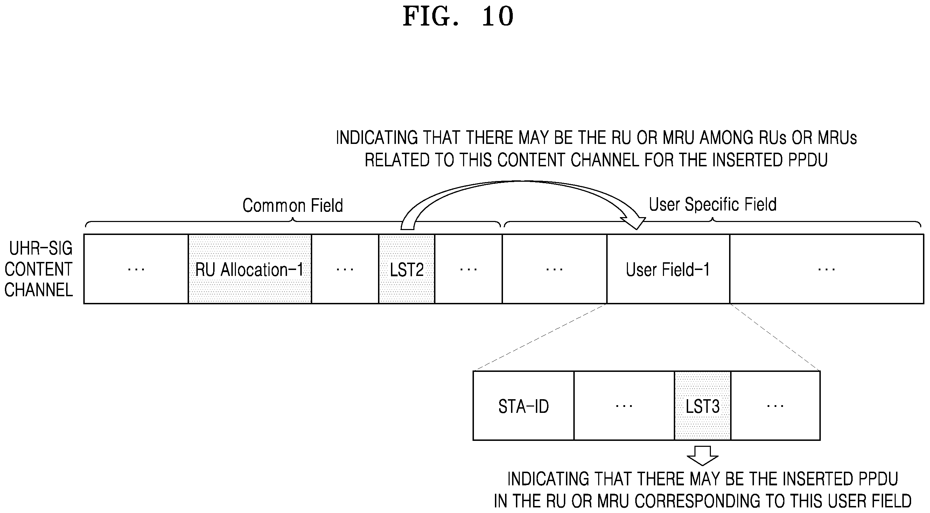

FIG. 10 is a diagram to explain a second LST subfield LST2 and a third LST subfield LST3 according to an embodiment. The second LST subfield LST2 and the third LST subfield LST3 may each include a value corresponding to part of information of an inserted PPDU. The inserted PPDU may be comprised of a value of the first LST subfield LST1 of FIG. 8 and values of the second LST subfield LST2 and third LST subfield LST3 of FIG. 10.

Referring to FIG. 10, the second LST subfield LST2 may be arranged in a common field of an UHR-SIG content channel, and the third LST subfield LST3 may be arranged in a user field User Field-1 of a user specific field of the UHR-SIG content channel. Meantime, some resources of a PPDU may be indicated through at least one RU allocation subfield RU Allocation-1 of the common field.

In an embodiment, the second LST subfield LST2 may include second bit data, the third LST subfield LST3 may include third bit data, and the second bit data and the third bit data may be used to indicate a target resource among some resources of the PPDU. In a specific example, the first LST subfield LST1 may indicate a resource unit or multiple resource unit for an inserted PPDU, among resource units or multiple resource units associated with the corresponding UHR-SIG content channel. Also, in a specific example, the second LST subfield LST2 may indicate whether there is an inserted PPDU through a resource unit or multiple resource unit corresponding to the user field User Field-1. In an example, each of the second bit data and the third bit data may include one bit.

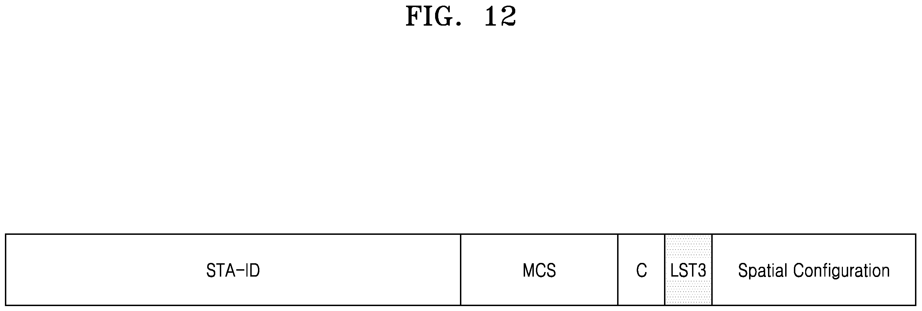

FIGS. 11 and 12 are diagrams to explain a specific example of arrangement of the second LST subfield LST2 and the third LST subfield LST3 of FIG. 10 on an UHR-SIG content channel.

Referring to FIG. 11, in an OFDMA transmission mode, a common field of the UHR-SIG content channel may include a spatial reuse subfield, a GI+LTF size subfield, a number of UHR-LTF symbols subfield, an LDPC extra symbol segment subfield (LDPC), a pre-FEC padding factor subfield, a PE disambiguity subfield (PE Dis.), a second LST subfield, a 'reserved' subfield (Disregard), a first RU allocation subfield RU Allocation-1, a CRC-1 subfield, a Tail-1 subfield, a second RU allocation subfield RU Allocation-2, a CRC-2 subfield, and a Tail-2 subfield. Meantime, the number of RU allocation subfields, the number of CRC subfields, and the number of tail subfields may decrease or increase according to a value of a BW field of a U-SIG field, that is, according to a bandwidth for communication between an access point and a plurality of stations.

In an embodiment, the second LST subfield LST2 may be arranged in the 'reserved' subfield (Disregard) of the common field. That is, the second LST subfield LST2 may be implemented using at least one of bits of the 'reserved' subfield (Disregard) of the common field.

Referring further to FIG. 12, in the OFDMA transmission mode, a user specific field of the UHR-SIG content channel may include an STA-ID subfield, a modulation and coding scheme (MCS) subfield, a coding subfield C, a third LST subfield LST3, and a spatial configuration subfield.

In an embodiment, the third LST subfield LST3 may be arranged between the coding subfield C and the spatial configuration subfield. However, this is only an embodiment and is not limited thereto, and an arrangement example of the third LST subfield LST3 may vary.

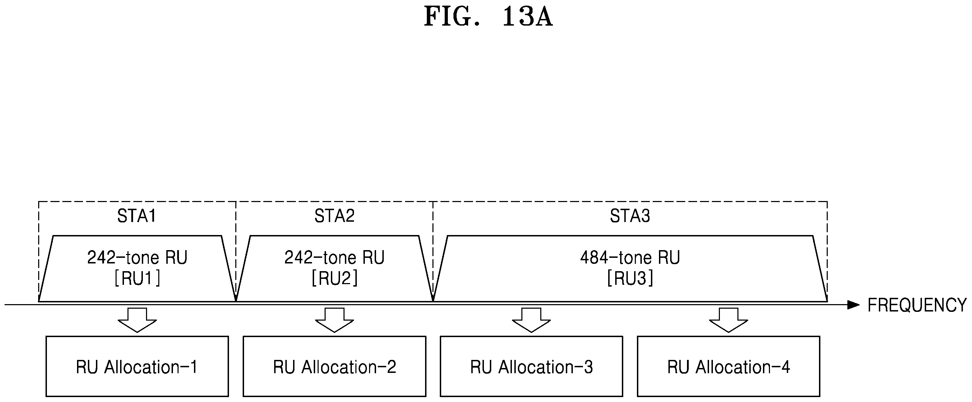

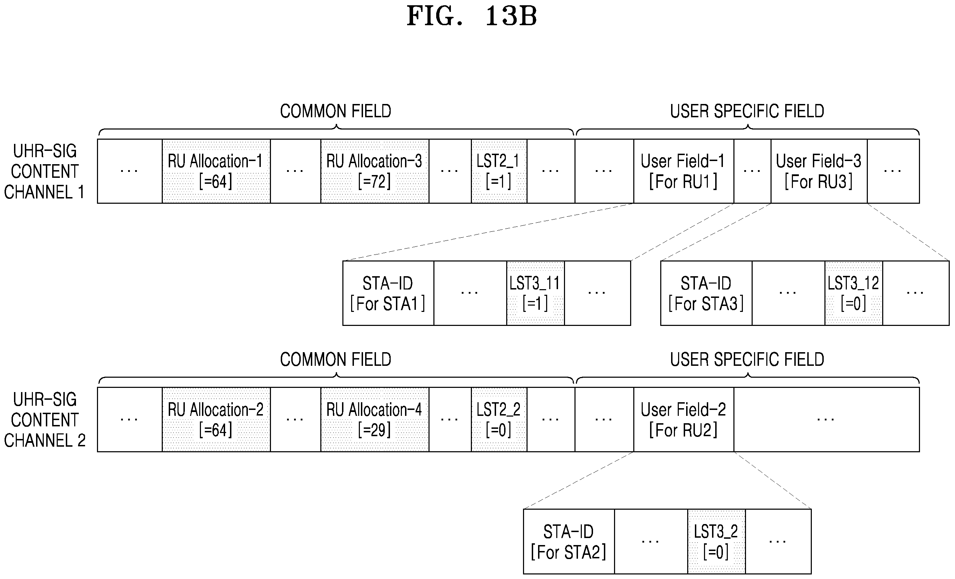

FIGS. 13A and 13B are diagrams to explain inserted PPDU information at an 80 MHz bandwidth. The inserted PPDU information may be comprised of values of a (2_1)st LST subfield LST2_1, a (2_2)nd LST subfield LST2_2, a (3_11)th LST subfield LST3_11, a (3_12)th LST subfield LST3_12, and a (3_2)nd LST subfield LST3_2 shown in FIG. 13B.

Referring to FIG. 13A, when operating in an OFDMA transmission mode at an 80MHz bandwidth, an access point may allocate a first resource unit RU1 comprised of 242-tone (or 242 subcarriers) to a first station STA1, allocate a second resource unit RU2 comprised of 242-tone to a second station STA2, and allocate a third resource unit RU3 comprised of 484-tone to a third station STA3.

In an example, the access point may fill a first RU allocation subfield RU Allocation-1 with a value so that the first RU allocation subfield RU Allocation-1 indicates the first resource unit RU1 comprised of 242-tone. The access point may fill a second RU allocation subfield RU Allocation-2 with a value so that the second RU allocation subfield RU Allocation-2 indicates the second resource unit RU2 comprised of 242-tone. Also, the access point may fill a third RU allocation subfield RU Allocation-3 and a fourth RU allocation subfield RU Allocation-4 with values so that the third RU allocation subfield RU Allocation-3 and the fourth RU allocation subfield RU Allocation-4 indicate the third resource unit RU3 comprised of 484-tone.

In an example, the UHR-SIG field in the 80 MHz bandwidth is comprised of four UHR-SIG content channels, and in FIG. 13B, among the four UHR-SIG content channels, a first UHR-SIG content channel UHR-SIG CONTENT CHANNEL 1 and a second UHR-SIG content channel UHR-SIG CONTENT CHANNEL 2 are illustrated.

Referring further to FIG. 13B, a common field of the first UHR-SIG content channel UHR-SIG CONTENT CHANNEL 1 may include the first RU allocation subfield RU Allocation-1, the third RU allocation subfield RU Allocation-3, and the (2_1)st LST subfield LST2_1. A user specific field of the first UHR-SIG content channel UHR-SIG CONTENT CHANNEL 1 may include a first user field User Field-1 and a third user field User Field-3.

A common field of the second UHR-SIG content channel UHR-SIG CONTENT CHANNEL 2 may include the second RU allocation subfield RU Allocation-2, the fourth RU allocation subfield RU Allocation-4, and the (2_2)nd LST subfield LST2_2. A user specific field of the second UHR-SIG content channel UHR-SIG CONTENT CHANNEL 2 may include a second user field User Field-2.

In an example, the first RU allocation subfield RU Allocation-1 may have a value of '64', and this may indicate that the first resource unit RU1 comprised of 242-tone has been allocated. The second RU allocation subfield RU Allocation-2 may have a value of '64', and this may indicate that the second resource unit RU2 comprised of 242-tone has been allocated. Also, the third RU allocation subfield RU Allocation-3 may have a value of `72', and the fourth RU allocation subfield RU Allocation-4 may have a value of '29', and this may indicate that the third resource unit RU3 comprised of 484-tone has been allocated.

In an example, the first user field User Field-1 may include an STA-ID subfield indicating the first station STA1, and the (3_11)th LST subfield LST3_11, and may be arranged in a position on a user specific field corresponding to the first RU allocation subfield RU Allocation-1, and this may indicate that the first resource unit RU1 has been allocated to the first station STA1. The third user field User Field-3 may include an STA-ID subfield indicating the third station STA3, and the (3_12)th LST subfield LST3_12, and may be arranged in a position on a user specific field corresponding to the third RU allocation subfield RU Allocation-3, and this may indicate that the third resource unit RU3 has been allocated to the third station STA3.

In an example, the second user field User Field-2 may include an STA-ID subfield indicating the second station STA2, and the (3_2)nd LST subfield LST3_2, and may be arranged in a position on a user specific field corresponding to the second RU allocation subfield RU Allocation-2, and this may indicate that the second resource unit RU2 has been allocated to the second station STA2.

In an example, the (2_1)st LST subfield LST2_1 may have a value of ` 1', and this may indicate that one of the first resource unit RU1 and the third resource unit RU3 indicated respectively in the first RU allocation subfield RU Allocation-1 and the third RU allocation subfield RU Allocation-3 includes a target resource. That is, the (2_1)st LST subfield LST2_1 may roughly indicate the target resource.

In an example, the (3_11)th LST subfield LST3_11 may have a value of '1', and this may indicate that the first resource unit RU1 includes the target resource. Also, the (3_12)th LST subfield LST3_12 may have a value of `0', and this may indicate that the third resource unit RU3 includes no target resource. That is, the (3_11)th LST subfield LST3_11 and the (3_12)th LST subfield LST3_12 may precisely indicate the target resource.

In an example, the (2_2)nd LST subfield LST2_2 may have a value of `0', and this may indicate that the second resource unit RU2 indicated in the second RU allocation subfield RU Allocation-2 includes no target resource.

In an example, the (3_2)nd LST subfield LST3_2 may have a value of `0', and this may once again indicate that the second resource unit RU2 includes no target resource. In some embodiments, the (2_2)nd LST subfield LST2_2 has a value of `0', and the (3_2)nd LST subfield LST3_2 may have an arbitrary value.

In an embodiment, a fourth station may check that one of the first resource unit RU1 and the third resource unit RU3 includes the target resource, based on the first RU allocation subfield RU Allocation-1, the third RU allocation subfield RU Allocation-3, and the (2_1)st LST subfield LST2_1 of the common field in the first UHR-SIG content channel UHR-SIG CONTENT CHANNEL 1, and may check that the first resource unit RU1 includes the target resource, based on the (3_1 1)th LST subfield LST3_1 1 of the first user field User Field-1 and the (3_12)th LST subfield LST3_12 of the third user field User Field-3 of the user specific field in the first UHR-SIG content channel UHR-SIG CONTENT CHANNEL 1.

In this specification, the (2_1)st LST subfield LST2_1 and the (2_2)nd LST subfield LST2_2 may be collectively referred to as a plurality of second LST subfields, and the (3_11)th LST subfield LST3_11, the (3_12)th LST subfield LST3_12, and the (3_2)nd LST subfield LST3_2 may be collectively referred to as a plurality of third LST subfields.

However, FIGS. 13A and 13B are merely embodiments to help understand embodiments, so it will be fully understood that FIGS. 13A and 13B are not interpreted limitedly thereto.

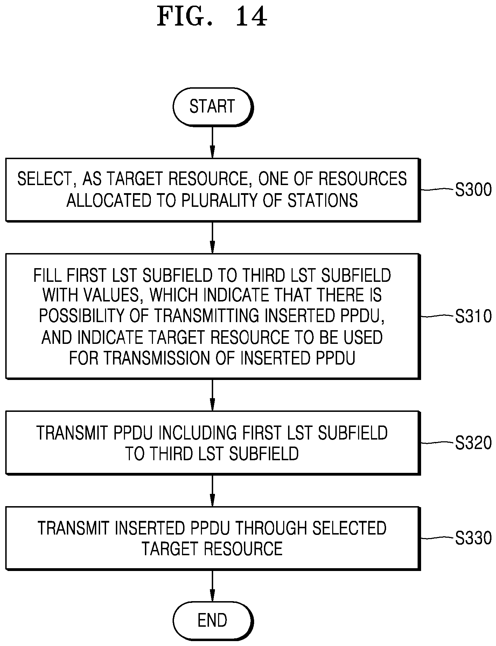

FIG. 14 is a flowchart to explain a method of wireless communication in an access point according to an embodiment. In FIG. 14, a plurality of stations may be located within a coverage area of the access point, and the access point may communicate with the plurality of stations, based on a WLAN.

Referring to FIG. 14, in operation S300, the access point may select any one of resources allocated to first stations among a plurality of stations as a target resource.

In operation S310, the access point may fill a first LST subfield to a third LST subfield with values, indicate that there is a possibility of transmitting an inserted PPDU, and indicate a target resource to be used for transmission of the inserted PPDU.

In operation S320, the access point may transmit a PPDU including the first LST subfield to the third LST subfield to the first stations. Meantime, the access point may transmit a PPDU to the first stations, but the PPDU may also be received by a second station located within a coverage area of the access point.

In operation S330, the access point may transmit the inserted PPDU to the second station among the plurality of stations through the target resource selected in operation S300. In an example, the inserted PPDU may include latency sensitive traffic for the second station.

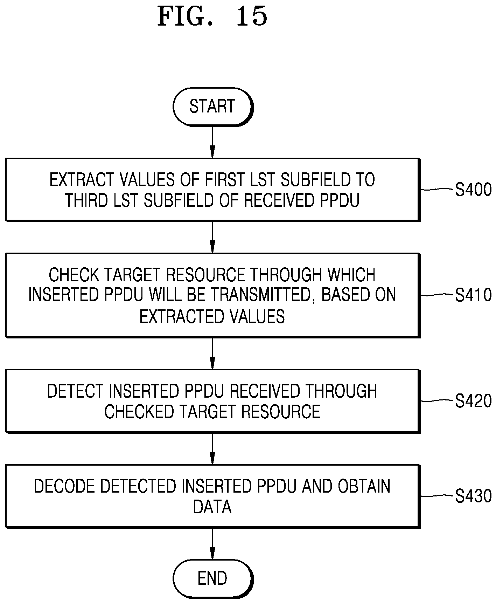

FIG. 15 is a flowchart to explain a method of wireless communication in a station according to an embodiment. The station of FIG. 15 may include the second station of FIG. 14.

Referring to FIG. 15, in operation S400, the station may extract values of a first LST subfield to a third LST subfield of a received PPDU.

In operation S410, the station may check a target resource through which an inserted PPDU will be transmitted, based on the values extracted in operation S400.

In operation S420, the station may detect the inserted PPDU received through the target resource checked in operation S410.

In operation S430, the station may decode the inserted PPDU detected in operation S420 and obtain data from the inserted PPDU. In an example, the obtained data may include latency sensitive traffic for the station.

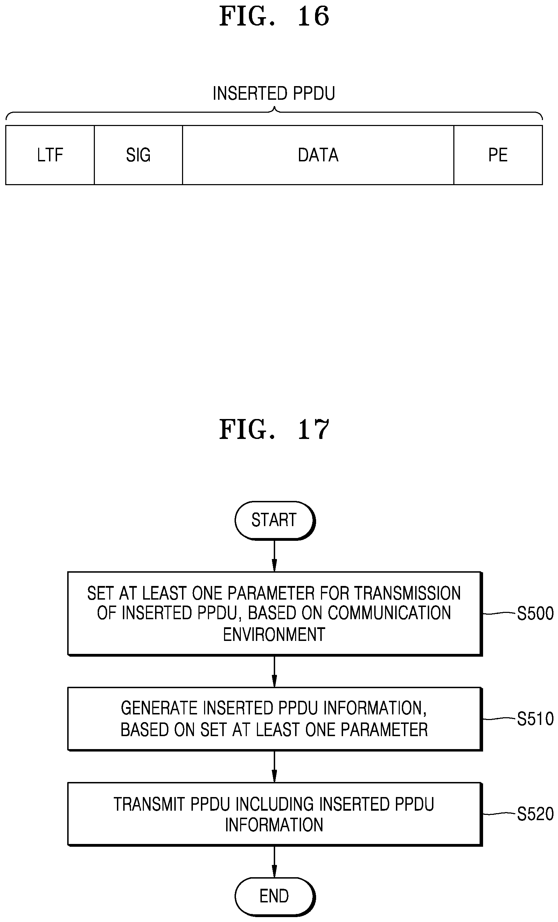

FIG. 16 is a diagram to explain an inserted PPDU format according to an embodiment.

Referring to FIG. 16, an inserted PPDU may include a long training field LTF, a signal field SIG, a data field DATA, and a PE field.

In an embodiment, the long training field LTF may include a certain data sequence for detection of the inserted PPDU at a target station that is a destination of the inserted PPDU. In a specific example, the certain data sequence may match a reference sequence stored in the target station.

In an embodiment, the signal field SIG may include a plurality of fields necessary for the target station to decode data included in the data field DATA. In a specific example, the signal field SIG may include at least one of an LDPC extra symbol segment subfield, a pre-FEC padding factor subfield, a PE disambiguity subfield, an STA-ID subfield, an MCS subfield, a number of spatial streams (NSS) subfield, a beamformed subfield, and a coding subfield.

In an embodiment, a value of the MCS subfield of the signal field SIG, that is, a modulation and coding scheme corresponding to the inserted PPDU may be the same as a modulation and coding scheme corresponding to first data, which is earlier transmitted through a target resource than the inserted PPDU, among a plurality of pieces of data included in a PPDU.

In some embodiments, the value of the MCS subfield of the signal field SIG, that is, the modulation and coding scheme corresponding to the inserted PPDU may be different from the modulation and coding scheme corresponding to the first data, which is earlier transmitted through the target resource than the inserted PPDU, among the plurality of pieces of data included in the PPDU.

Also, in some embodiments, the value of the MCS subfield of the signal field SIG, that is, the modulation and coding scheme corresponding to the inserted PPDU may be fixed to a scheme predefined between an access point and the target station.

FIG. 17 is a flowchart to explain a method of wireless communication in an access point according to an embodiment.

Referring to FIG. 17, in operation S500, the access point may set at least one parameter for transmission of an inserted PPDU, based on a communication environment. In an embodiment, the at least one parameter may include at least one of a parameter related to whether a function of transmitting the inserted PPDU is activated, a parameter related to the number of target resources for transmission of the inserted PPDU, and a parameter related to whether to select an allocated multiple resource unit as the target resource.

In operation S510, the access point may generate inserted PPDU information, based on the at least one parameter set in operation S500.

In operation S520, the access point may transmit a PPDU including the inserted PPDU information.

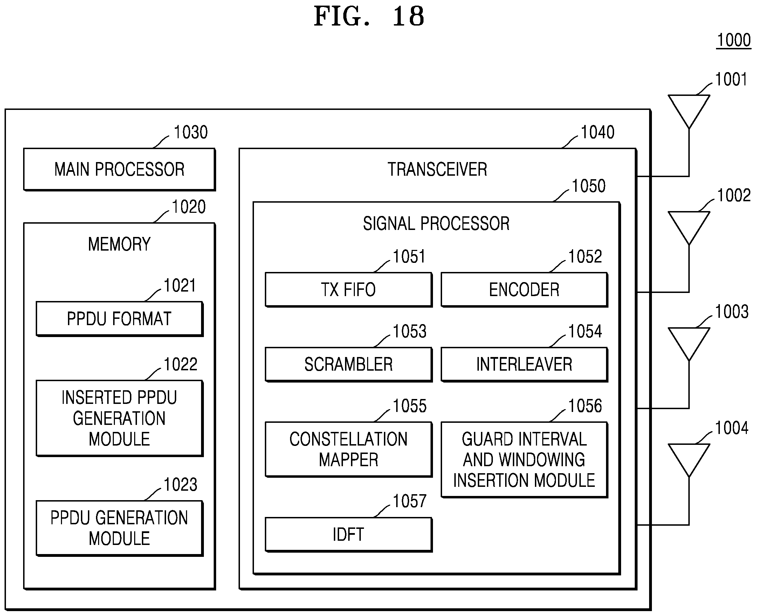

FIG. 18 is a block diagram illustrating a device 1000 according to an embodiment. The device 1000 of FIG. 18 may include a communication device including a transceiver that may perform data communication, and may include an access point or a station. A description is made below focusing on an example in which the device 1000 corresponds to the access point.

The device 1000 may include a main processor 1030, a memory 1020, a transceiver 1040, and a plurality of antennas 1001 to 1004. The main processor 1030, the memory 1020, the transceiver 1040, and the plurality of antennas 1001 to 1004 may be directly or indirectly connected to each other.

Specifically, the main processor 1030 may control the memory 1020 and the transceiver 1040. The memory 1020 may include a PPDU format 1021, an inserted PPDU generation module 1022, and a PPDU generation module 1023. In an example, the inserted PPDU generation module 1022 and the PPDU generation module 1023 may be comprised of codes or instructions executed by the main processor 1030.

In an embodiment, the main processor 1030 may generate inserted PPDU information, based on the inserted PPDU generation module 1022. The inserted PPDU information may be included in a PPDU that is generated by the main processor 1030 by using the PPDU generation module 1023. Also, the main processor 1030 may generate an inserted PPDU matching the inserted PPDU information, based on the inserted PPDU generation module 1022. Embodiments related to the inserted PPDU information and the inserted PPDU may include the embodiments described in FIGS. 1 to 17.

Meantime, a signal processor 1050 may have various modules (i.e., various transmit path modules) configured to generate a PPDU or each section of various types of communication transmission units. In this specification, the signal processor 1050 may also be referred to as a processor. FIG. 18 illustrates the signal processor 1050 included in the transceiver 1040, but this is only an embodiment and is not limited thereto. The signal processor 1050 may be separated from the transceiver 1040 and be implemented as a separate construction.

Specifically, the signal processor 1050 may include a transmit first-in-first-out (TX FIFO) 1051, an encoder 1052, a scrambler 1053, an interleaver 1054, a constellation mapper 1055 (for example, it may generate a QAM symbol), an inversed discrete Fourier transformer (IDFT) 1057, and a guard interval and windowing insertion module 1056 (for example, it may insert a guard interval on a frequency, modify a signal through windowing, and reduce interference on spectrum).

For reference, the transceiver 1040 may include components well known to those skilled in the art, as illustrated in the drawing. And, the corresponding components may be implemented in a manner well known to those skilled in the art, and may be implemented using hardware, firmware, software logic, or a combination thereof.

Meantime, FIG. 18 only illustrates an example of the device 1000 and an embodiment is not limited thereto. That is, various changes may be made in FIG. 18.

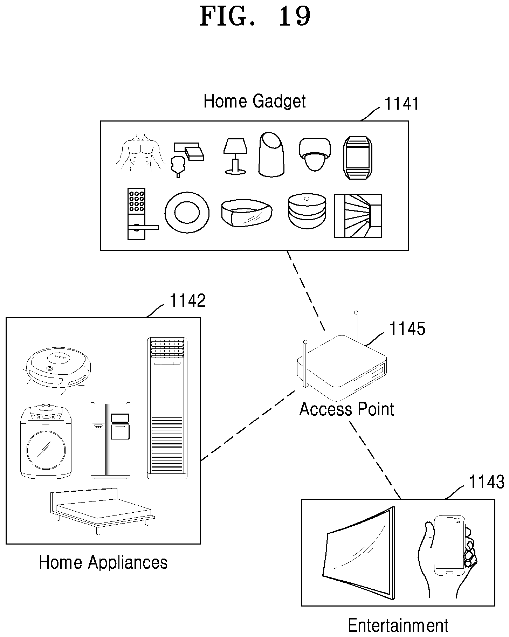

FIG. 19 is a diagram illustrating examples of devices for wireless communication according to an embodiment. Specifically, FIG. 19 illustrates an Internet of Things (IoT) network system that includes home gadgets 1141, home appliances 1142, entertainment devices 1143, and an access point 1145.

In embodiments, in the devices for wireless communication of FIG. 19, as described above with reference to the drawings, a first device may transmit a PPDU including inserted PPDU information to a plurality of second devices, and when detecting generation of latency sensitive traffic for a third device, the first device may transmit an inserted PPDU to the third device, based on the inserted PPDU information.

Also, in embodiments, the third device may obtain the inserted PPDU information from the PPDU, and perform a monitoring operation for the inserted PPDU, based on the inserted PPDU information.

As above, embodiments are disclosed in the drawings and specifications. In this specification, embodiments have been described using specific terms, but this is only used for the purpose of explaining the technical idea and is not used to limit the meaning or scope of the embodiments. Therefore, those skilled in the art will understand that various modifications and other equivalent embodiments are possible.

Various changes in form and details of embodiments may be made therein without departing from the scope of the following claims.

## Claims

1. A method of wireless communication in a first device (AP1), the method comprising:
transmitting (S100) a first physical layer protocol data unit, PPDU, comprising inserted PPDU information to a plurality of second devices (STA1, STA2, STA3);
detecting (S110) a generation of a latency sensitive traffic for a third device (STA4) while transmitting the first PPDU to the plurality of second devices (STA1, STA2, STA3); and
transmitting (S120) an inserted PPDU comprising the latency sensitive traffic to the third device (STA4) through a target resource corresponding to the inserted PPDU information.

2. The method of claim 1, wherein:
the first PPDU is transmitted to the plurality of second devices (STA1, STA2, STA3) through a plurality of resources allocated to the plurality of second devices (STA1, STA2, STA3), and
the inserted PPDU information comprises first information indicating whether there is a presence of the inserted PPDU and second information indicating the target resource among the plurality of resources.

3. The method of claim 2, wherein:
the first information is included in a first signal field in the first PPDU, and
the second information is included in second signal fields indicating the plurality of resources in the first PPDU.

4. The method of claim 1, wherein:
the first PPDU comprises a first signal field, and second signal fields indicating a plurality of resources allocated for transmission of the first PPDU, and
the inserted PPDU information comprises a value of a first latency sensitive traffic, LST, subfield of the first signal field, values of second LST subfields of common fields of the second signal fields, and values of third LST subfields of user specific fields of the second signal fields.

5. The method of claim 4, wherein:
the first LST subfield comprises first bit data for indicating whether there is a presence of the inserted PPDU,
each of the second LST subfields comprises second bit data for roughly indicating the target resource, and
each of the third LST subfields comprises third bit data for precisely indicating the target resource.

6. The method of claim 1, wherein:
transmission of the inserted PPDU is possible based on the first device (AP1) satisfying a condition of communicating with the plurality of second devices (STA1, STA2, STA3) in an orthogonal frequency division multiple access, OFDMA, transmission mode.

7. The method of claim 6, wherein a first signal field in the first PPDU comprises information indicating the OFDMA transmission mode.

8. The method of claim 1, wherein the inserted PPDU is transmitted within a transmission opportunity, TXOP, duration of the first PPDU.

9. The method of any one of claims 1 to 8, wherein the inserted PPDU comprises a long training field, a signal field, a data field, and a packet extension, PE, field.

10. The method of any one of claims 1 to 9, wherein:
a first modulation and coding scheme corresponding to the inserted PPDU is the same as a second modulation and coding scheme corresponding to first data of the first PPDU, wherein the first data is transmitted before the inserted PPDU through the target resource, and
wherein a plurality of pieces of data of the first PPDU comprise the first data.

11. The method of any one of claims 1 to 9, wherein:
a first modulation and coding scheme corresponding to the inserted PPDU is different from a second modulation and coding scheme corresponding to first data, wherein the first data is transmitted before the inserted PPDU through the target resource, and
a plurality of pieces of data of the first PPDU comprise the first data.

12. The method of any one of claims 1 to 9, wherein a modulation and coding scheme corresponding to the inserted PPDU is fixed by a scheme predefined between the first device and the third device.

13. The method of any one of claims 1 to 12, wherein
the inserted PPDU is transmitted together with the remnant excluding first data transmitted through the target resource among a plurality of pieces of data comprised in the PPDU.

14. The method of any one of claims 1 to 13, wherein the target resource is one of a resource unit, RU, and a multiple resource unit, MRU.

15. A method of wireless communication in a first device (STA4), the method comprising:
receiving (S200) a first physical layer protocol data unit, PPDU, comprising a plurality of pieces of data from a second device (AP1) through a plurality of resources;
obtaining (S210) inserted PPDU information from the first PPDU; and
performing (S220) a monitoring operation for an inserted PPDU by monitoring the inserted PPDU information.
